Europäisches Patentamt

European Patent Office

Office européen des brevets

(11) Publication number: **0 240 538**
**B1**

## EUROPEAN PATENT SPECIFICATION

(45) Date of publication of patent specification: **17.05.89**

(51) Int. Cl.⁴: **B 60 K 9/00, B 60 T 1/10**

(21) Application number: **86905996.4**

(22) Date of filing: **26.09.86**

(86) International application number:
**PCT/SE86/00434**

(87) International publication number:
**WO 87/01993 09.04.87 Gazette 87/08**

(54) CONTROL METHOD AND DEVICE FOR A REGENERATIVE DRIVE SYSTEM, PARTICULARLY FOR VEHICLES.

| | |
|---|---|
| (30) Priority: **27.09.85 SE 8504495** | (73) Proprietor: **VOLVO FLYGMOTOR AB**<br>**S-46181 Trollhättan (SE)** |
| (43) Date of publication of application:<br>**14.10.87 Bulletin 87/42** | (72) Inventor: **HUGOSSON, Conny**<br>**Kungsgatan 79 A**<br>**S-461 35 Trollhättan (SE)** |
| (45) Publication of the grant of the patent:<br>**17.05.89 Bulletin 89/20** | (74) Representative: **Delmar, John-Ake**<br>**Östermalmsgatan 45**<br>**S-114 26 Stockholm (SE)** |
| (84) Designated Contracting States:<br>**BE DE FR GB IT NL** | |
| (56) References cited:<br>**EP-A-0 047 643**<br>**DE-A-2 551 580**<br>**DE-A-3 028 847**<br>**US-A-4 132 283**<br><br>**ATZ Automobiltechnische Zeitschrift 81 (1979),**<br>**7/8, Seiten 327 und 328.** | |

Courier Press, Leamington Spa, England.

## Description

The present invention refers to a method and a device for control of a regenerative hydrostatic drive system as specified in the preamble of Claims 1 and 3. Such a method and such a device are known from e.g. ATZ Automobiltechnische Zeitschrift 81(1979)7/8 "Antriebe zur Bremsenergie-Rückgewinnung bei Omnibussen", pages 327 and 328.

As a link in the efforts in many places of the world as far as environment protection and energy saving is concerned, it has been closer studied during the last years whether improvements can be achieved in connection with vehicles driven by internal combustion engines. Particularly buses and most particularly buses in traffic in densely build areas exhibit driving cycles consisting of a powerful acceleration, a short travel at economic operating speed of the driving engine, which preferably is a diesel engine, and a heavy braking. In particular, the braking periods have been studied as to the possibilities of recovering the inertia or kinetic energy of the vehicle.

One proposal studied implies that to the power transmission between an internal combustion engine with automatic gearbox and a vehicle drive axle is releasably connected a hydraulic machine, which is coupled to a closed hydraulic fluid circuit, comprising a high pressure accumulator and a low pressure accumulator for the hydraulic fluid. Particularly in connection with the use in vehicles it is important that the accumulator volume is kept small for reasons of space and economy and is utilized as fully as possible. During certain situations of operation there occur, however, extreme conditions which might cause risks for malfunction or even physical damages to the mechanical components. Therefore it is of extreme importance that the position of the hydraulic fluid volume within the system and particularly within the high pressure accumulator can be continuously monitored exactly and reliably during operation.

Previous attempts to carry out said monitoring and control have been based on sensing the pressure of the high pressure accumulator. The pressure of said accumulator is provided by means of a gas body, but the pressure of the gas is dependent the temperature, as is well known. In order to avoid said temperature dependency, attempts have instead been made to continuously detect the position of the piston of both the high pressure and the low pressure accumulator but this has turned out to involve complicated and expensive designs including e.g. long linkages, risks for leakages and other drawbacks. To monitor only by means of calculations how the hydraulic fluid moves within the system also has turned out to be insufficient due to poor exactness.

The object of the present invention now is to provide a method for controlling such a regenerative hydrostatic drive system, wherein the drawbacks hitherto present have been eliminated without requiring expensive and complicated design solutions. To this end, a method and device in accordance with the present invention is characterized by the features specified in the characterizing parts of Claims 1 and 3.

By the invention it is now achieved a very exact determination of the instantaneous position of the hydraulic fluid volume within the drive system so as to allow the high pressure supply to be utilized entirely all down to a very small rest volume of hydraulic fluid of the order of 0,5% of the total volume of the high pressure accumulator without any risk of running empty and cause interruptions and jerks of the power flow to the drive axle when shifting to drive engine operation.

Another object of the invention is to suggest a device for carrying out said method and of the kind stated in the preamble of the accompanying claim 3. The features essentially distinguishing said device are set forth in the characterizing clause of the same claim 3.

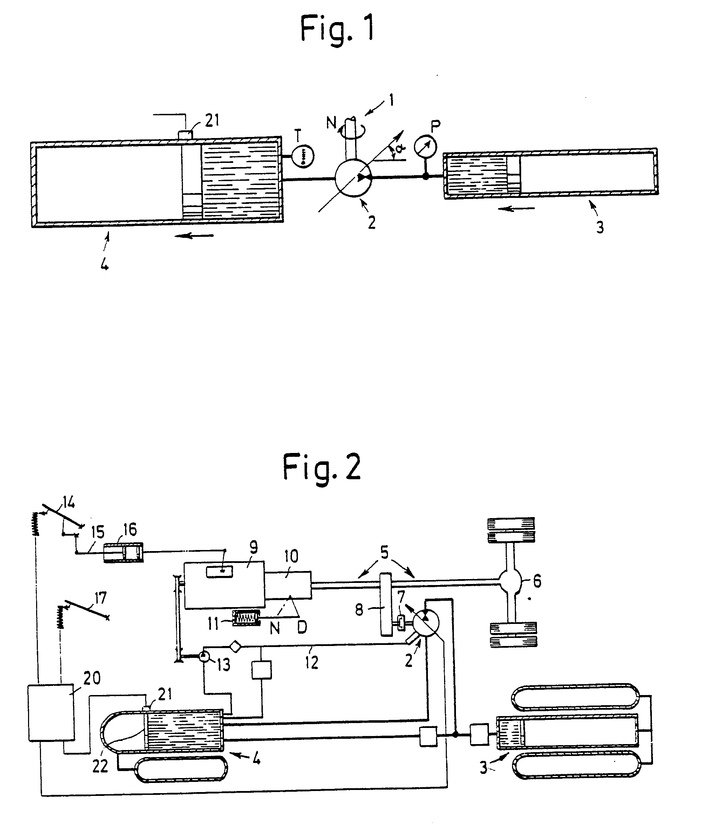

By way of example, the invention will be further described below with reference to the accompanying drawing, in which Fig 1 diagrammatically illustrates the principle of a regenerative hydrostatic drive system, while Fig 2 also diagrammatically illustrates such a drive system applied to a motor vehicle.

As is evident from Fig 1, a hydrostatic drive system comprises a hydrostatic machine 2, connected to a suitable power source (not illustrated in this Figure) such as a vehicle drive engine through a shaft 1. Said machine is reversible, i e adapted to operate alternatively as motor or pump, and is connected to a hydraulic fluid circuit. This circuit comprises a high pressure accumulator 3 for hydraulic fluid and a low pressure accumulator 4 for the same fluid. Preferably, the hydrostatic machine is a piston machine of so-called bent-axis type with variable displacement, which variation is provided for by angular adjustment of the adjustment yoke of the machine to an angle α. For the purpose of control, it is furthermore suitable that the high pressure accumulator 3 is provided with a pressure gauge P while the low pressure accumulator 4 has a temperature sensor T.

A practical example of the application in a vehicle drive system has been more closely illustrated in Fig 2. In said example, the hydrostatic machine 2 is connected with the power transmission 5 to a drive axle 6, in the present case being the rear axle of an omnibus. Said connection preferably also includes a releasable coupling 7 and a suitable gearing 8, when needed. The vehicle or bus has a primary drive engine in the form of a diesel engine 9, which is connected with the power transmission 5 through a preferably automatic transmission or gearbox 10. The gearbox 10 is shiftable between a neutral position N and a drive position D by means of a shift member 11.

The hydrostatic machine 2 is of a kind having variable displacement and this variation is achieved as known per se by means of a control fluid, which through a control fluid circuit 12 is supplied to the machine 2 from a pump 13, driven by the vehicle engine 9. Preferably the control fluid is taken from the low pressure accumulator 4 for the working fluid. The vehicle drive engine 9 is controlled in a conventional way by the aid of an accelerator or speed pedal 14, which is connected with the engine 9 through a linkage 15 comprising a compensation cylinder 16. Furthermore, for operation of the vehicle the same is provided with a brake pedal 17. For monitoring and control of the hydrostatic drive system, the same is connected with an electronic control unit 20, the functions of which will be further described below.

In Fig 2, the hydrostatic drive system and the vehicle have been illustrated in a condition immediately before shifting from driving only by means of hydraulic fluid from the high pressure accumulator 3 to driving only by the vehicle drive engine 9. Hydraulic fluid from the high pressure accumulator 3 then is still flowing in the direction from said accumulator 3 to the low pressure accumulator 4 and by a suitable sensing means 21 (in the present case located at the low pressure accumulator 4) the achievement of a predetermined fluid volume in said low pressure accumulator 4 is sensed. Most simply this can be made in practice by providing the low pressure accumulator piston 22 with a magnetic strip (not further illustrated), which when passing a switch 21, provides an output signal which is supplied to the electronic control unit 20. In said condition of the hydrostatic system the high pressure volume is rapidly approaching zero, and when receiving the output signal from the switch 21 the electronic control unit 20 determines the remaining quantity of hydraulic fluid in said high pressure accumulator 3. The specific volume of the hydraulic fluid is, however, dependent of the temperature to such an extent, that it must be taken into account in this case, when determining the remaining quantity of hydraulic fluid in the high pressure accumulator 3. For this reason, the temperature of the hydraulic fluid is detected by the aforementioned temperature sensor T, which emits an output signal to the electronic control unit 20 in order to form in the latter a correction factor for said quantity determination, which is made while taking into account the known total volume of hydraulic fluid included in the system.

The electronic control unit 20 then continues its continuous determination of the variation of the quantity of hydraulic fluid remaining in the high pressure supply 3 on the basis of the instantaneous speed and displacement of the hydrostatic machine 2. In the electronic control unit 20 it is simultaneously also determined the smallest quantity of hydraulic fluid which at instantaneous speed and displacement of the hydrostatic machine 2 is required for allowing a jerk-free shifting to driving only by means of the vehicle drive engine 9, and the results of said pair of determinations are continuously compared in the electronic control unit 20. When said determinations are found to be equal, the point has been reached, at which the shifting to driving only by the vehicle drive engine 9 necessarily must be done in order to avoid power jerks and the control unit 20 then releases an output signal for the shifting to be carried out. By suitable adaptation of the various control parameters of the control unit 20, the hydraulic fluid volume in the high pressure accumulator 3 can be almost entirely utilized so that only a rest volume of the order of 0,5% of its total volume remains in the high pressure accumulator 3 after finished shifting to driving by means of only the vehicle drive engine 9.

As a non-limiting example of actual pressures and volumes applied in a practical embodiment of the invention, it can be mentioned that in the drive system position illustrated in Fig 2 a hydraulic fluid volume of 11 litres remained in the high pressure accumulator 3, while the pressure amounted to 240 bars at a gas body volume of 140 litres. On that occasion, the low pressure accumulator 4 contained 54 litres of hydraulic fluid at a pressure of 4,5 bars at the gas body therein, which had a volume of 59 litres.

However, when braking the emptied high pressure accumulator 3 is re-loaded for regenerating the vehicle motion energy, the hydrostatic machine 2 starting to operate as a pump for filling the high pressure accumulator 3.

During the initial phase of a braking of the vehicle from a cruising speed of about 55 km/h the gearbox 10 is kept engaged or in drive position D but after having achieved a predetermined minimum quantity of hydraulic fluid in the high pressure accumulator 3 a shifting to neutral N of the automatic gearbox can be made by actuation of the shift member 11 through the electronic control unit 20 in order to avoid unnecessary parasitic energy losses. Should the braking of the vehicle occur for a rather long period of time, such as from the afore-mentioned cruising speed and down to approximately zero, it is intended that with suitable dimensioning of the high pressure accumulator 3, the same will have been almost entirely filled or re-loaded. As example it can be mentioned that the pressure then amounts to 360 bars for a gas body volume of 110 litres and a hydraulic fluid quantity of 41 litres. Corresponding values for the low pressure accumulator 4 were 2,5 bars for a gas body volume of 89 litres and a hydraulic fluid volume of 24 litres.

To those skilled in the art it is also obvious that the control method and device as explained above provide for the achievement of various further inventive developments which are advantageous. Thus it is an advantageous embodiment of the invention to continue, also during braking of the vehicle after finished acceleration thereof by the hydraulic fluid in the high pressure accumulator and substantial emptying thereof, i e during the reversed flow of the hydraulic fluid form the low pressure to the high pressure accumulator and re-loading of the latter, the continuous determination of the change of the hydraulic fluid volume in the high pressure accumulator and simultaneously determine the smallest hydraulic fluid quantity required at instantaneous speed of the hydrostatic machine for resumed driving by the latter, the results of said two determinations being continuously compared and when found equal they are brought to allow driving by means of the hydrostatic machine, i e to interrupt the connection between the primary engine and the drive axle, in order to minimize friction energy losses.

**Claims**

1. A method for control of a regenerative hydrostatic drive system, particularly for vehicles, which system comprises a primary engine with a power transmission to a drive axle and with a hydrostatic machine which is selectively connectible to the same drive axle and connected to a hydraulic fluid circuit, which comprises at least one high pressure supply and one low pressure supply of said hydraulic fluid, the hydrostatic machine during retardation of a vehicle being connected with said drive axle and operating as pump provides a charging of said high pressure supply, while the last-mentioned during acceleration of the vehicle drives the hydrostatic machine as a motor and hence also the drive axle, characterized in that during the flow of hydraulic fluid in the direction from the high pressure supply to the low pressure supply, the achievement of a predetermined fluid volume in one of the supplies is detected for determination of the quantity of hydraulic fluid remaining in the high pressure supply, whereby in the case the detection of the predetermined fluid volume is made in the low pressure accumulator a correction coefficient for the temperature of the hydraulic fluid is incorporated in said volume determination, which in this case is made while taking the given total hydraulic fluid volume into consideration, after which the change of the remaining volume of hydraulic fluid in the high pressure supply is continuously determined on the basis of instantaneous speed and displacement of the hydrostatic machine at the same time as the smallest volume of hydraulic fluid is determined, which at instantaneous speed and displacement of the hydrostatic machine is required for allowing a jerk-free shifting to driving only by means of the primary drive engine, the results of said two determinations being continuously compared and when found equal brought to initiate said shifting so as to provide for a maximum utilization of the remaining hydraulic fluid volume in the high pressure supply.

2. A method according to claim 1, characterized by continuing also during braking of the vehicle after finished acceleration thereof by means of the hydraulic fluid in the high pressure supply, i e during the reversed flow of the hydraulic fluid from the low pressure supply to the high pressure supply and re-loading of the latter, the continuous determination of the change of the hydraulic fluid volume in the high pressure supply as well as the determination of the smallest quantity of hydraulic fluid, which is required at instantaneous speed of the hydrostatic machine for resumed driving by means of the same, the result of said two determinations being continuously compared and when found equal brought to allow driving by means of the hydrostatic machine, i e interrupting the connection between the primary engine and the drive axle, in order to minimize friction energy losses.

3. A device for carrying out the method according to claim 1 for control of a hydrostatic drive system, particularly for vehicles, comprising a primary engine (9) with a power transmission (5) to a drive axle (6) and a hydrostatic machine (2) which is selectively connectible with the same drive axle (6) and connected to a hydraulic fluid circuit comprising at least one high pressure supply (3) and one low pressure supply (4) of hydraulic fluid, the hydrostatic machine (2) during braking of a vehicle being connected with the drive axle (6) and adapted, while operating as a pump, to pump hydraulic fluid into the high pressure supply (3) to load the same, while the machine (2) during acceleration of the vehicle being adapted to be driven as motor by hydraulic fluid from the high pressure supply (3) and to thereby drive the drive axle (6), characterized in that a sensing means (21) is adapted to sense the achievement of a predetermined fluid volume in one of the supplies (3 or 4) during the flow of the hydraulic fluid in the direction from the high pressure (3) to the low pressure (4) supply and to then deliver to an electronic control unit (20) an output signal for determination of the remaining quantity of hydraulic fluid in the high pressure supply (3), a temperature sensing means (T) being adapted to sense the temperature of the hydraulic fluid, should the fluid volume sensing means (21) be arranged to sense the fluid volume in the low pressure supply (4), and in dependency thereof deliver an output signal to the electronic control unit (20) for forming a correction factor for the quantity determination, said determination being adapted to be carried out while taking into account the known total volume of hydraulic fluid, and in that the control unit (20), after having received an output signal from the volume sensing means (21), on one hand continuously determines the change of the hydraulic fluid quantity remaining in the high pressure supply (3) on the basis of signals delivered to the control unit (20) representing the instantaneous values of speed and displacement of the hydrostatic machine (2) and on the other hand determines the minimum quantity of hydraulic fluid which at said instantaneous speed and displacement of the hydrostatic machine (2) is required for allowing a jerk-free shifting to driving only by the primary drive engine (9), and on the third hand continuously compares the results of said determinations and when being equal delivers an output signal for initiating said shifting.

## Patentansprüche

1. Verfahren zur Steuerung eines regenerativen hydrostatischen Antriebssystems, insbesondere für Fahrzeuge, welches sich zusammensetzt aus einem Primärmotor mit Kraftübertragung an eine Antriebsachse und einer hydrostatischen Vorrichtung, welche wahlweise mit derselben Antriebsachse und mit einem Kreislauf einer hydraulischen Flüssigkeit verbunden wird, welcher mindestens einen Behälter dieser hydraulischen Flüssigkeit unter hohem Druck und einen Behälter dieser hydraulischen Flüssigkeit unter niedrigem Druck umfaßt, wobei die hydrostatische Vorrichtung während der Verzögerung eines Fahrzeuges mit der Antriebsachse verbunden ist und als Pumpe fungiert, und so den Vorrat unter hohen Druck bringt, während diese Flüssigkeit unter hohem Druck bei Beschleunigung des Fahrzeuges die hydrostatische Vorrichtung als Motor und somit auch die Antriebsachse antreibt, dadurch gekennzeichnet, daß während des Flusses von hydraulischer Flüssigkeit in Richtung von dem Hochdruckbehälter zu dem Behälter unter niedrigem Druck das Vorhandensein eines vorbestimmten Flüssigkeitsvolumens in einer der Behälter zur Bestimmung der in der Hochdruckquelle verbleibenden Menge an hydraulischer Flüssigkeit festgestellt wird, wobei bei Vorfinden des vorbestimmten Flüssigkeitsvolumens in dem Niederdruckbehälter ein Korrekturkoeffizient für die Temperatur der hydraulischen Flüssigkeit in die Bestimmung des Volumens miteinbezogen wird, wobei die Volumenbestimmung in diesem Falle unter Berücksichtigung des gesamten gegebenen hydraulischen Flüssigkeitsvolumens stattfindet, nach dem der Wechsel des verbleibenden Volumens hydraulischer Flüssigkeit in dem Hochdruckbehälter kontinuierlich auf der Basis von momentaner Geschwindigkeit und Hubraum der hydrostatischen Vorrichtung zu demselben Zeitpunkt, an dem das geringste Volumen hydraulischer Flüssigkeit festgestellt wird, welches bei momentaner Geschwindigkeit und Hubraum der hydrostatischen Vorrichtung erforderlich ist, um ein ruckfreies Umschalten auf Antrieb nur durch den Primärantriebsmotor zu ermöglichen, die Ergebnisse der beiden Messungen werden kontinuierlich verglichen und bei ihrer Übereinstimmung zur Auslösung des Umschaltens verwendet, um eine maximale Nutzung des verbleibenden hydraulischen Flüssigkeitsvolumens in dem Hochdruckbehälter zu gewährleisten.

2. Verfahren nach Anspruch 1, dadurch gekennzeichnet, daß auch während eines Bremsvorganges des Fahrzeugs nach beendeter Beschleunigung mittels der hydraulischen Flüssigkeit in dem Hochdruckbehälter, d.h. während des umgekehrten Flusses der hydraulischen Flüssigkeit von dem Niederdruckbehälter in den Hochdruckbehälter und Wiederauffüllung des letzteren, die ständige Messung des Wechsels des hydraulischen Flüssigkeitsvolumens im Hochdruckbehälter und die Messung der geringsten Menge hydraulischer Flüssigkeit, die bei momentaner Geschwindigkeit der hydrostatischen Vorrichtung zur Wiederaufnahme des Antriebs durch dieselbe benötigt wird, vorgenommen werden und die Ergebnisse dieser beiden Messungen ständig vergleichen werden und bei ihrer Übereinstimmung zur Ermöglichung des Antriebs mittels der hydrostatischen Maschine, d.h. durch Unterbrechung der Verbindung zwischen Primärmotor und der Antriebsachse, verwendet werden, um dadurch Energieverluste durch Reibung auf ein Minimum zu verringern.

3. Vorrichtung zur Ausführung des Verfahrens nach Anspruch 1 zur Steuerung eines hydrostatischen Antriebssystems, insbesondere für Kraftfahrzeuge, mit einem Primärmotor (9) mit Kraftübertragung (5) an eine Antriebsachse (6) und eine hydrostatische Vorrichtung (2), die wahlweise mit der Antriebsachse (6) verbindbar ist und in Verbindung mit einem Kreislauf einer hydraulischen Flüssigkeit steht, welcher mindestens einen Hochdruckbehälter (3) und einen Niedrigdruckbehälter (4) dieser hydraulischen Flüssigkeit umfaßt, wobei die hydrostatische Vorrichtung (2) während des Bremsvorganges des Fahrzeuges mit der Antriebsachse (6) verbunden ist und in ihrer Funktion als Pumpe darauf ausgelegt ist, hydraulische Flüssigkeit in den Hochdruckbehälter (3) zu pumpen, um diesen zu füllen, während die Maschine (2) während der Beschleunigung des Fahrzeuges als Motor von der hydraulischen Flüssigkeit aus dem Hochdruckbehälter angetrieben wird und dadurch wiederum die Antriebsachse (6) antreibt, dadurch gekennzeichnet, daß eine Meßvorrichtung (21) das Vorhandensein eines vorbestimmten Flüssigkeitsvolumens in einem der Behälter (3 oder 4) während des Flusses von hydraulischer Flüssigkeit in Richtung von dem Hochdruck (3) zu dem Niederdruckbehälter (4) ermittelt und daraufhin ein Ausgangssignal zur Bestimmung der verbleibenden Menge hydraulischer Flüssigkeit in dem Hochdruckbehälter (3) an eine elektronische Steuereinheit (20) abgibt, daß ein Temperaturfühler (T) die Temperatur der hydraulischen Flüssigkeit ermittelt, sollte die Vorrichtung zur Feststellung des Flüssigkeitsvolumens (21) darauf ausgerichtet sein, das Flüssigkeitsvolumen in dem Niederdruckbehälter (4) zu ermitteln, und in Abhängigkeit davon ein Ausgangssignal an eine elektronische Steuereinheit (20) zur Erstellung eines Berichtigungsfaktors zur Mengenbestimmung weiterzuleiten, wobei diese Bestimmung unter Berücksichtigung des bekannten Gesamtvolumens der hydraulischen Flüssigkeit durchzuführen ist, und dadurch, daß die Steuereinheit (20) nach Erhalt des Ausgangssignals von der Volumenmeßvorrichtung (21) einerseits ständig die Veränderung der restlichen Menge hydraulischer Flüssigkeit in dem Hochdruckbehälter (3) anhand von an die Steuereinheit (20) geleiteten Signalen bestimmt, welche die momentanen Werte der Geschwindigkeit und des Hubraums der hydrostatischen Vorrichtung (2) darstellen, und daß sie andererseits die minimale Menge hydraulischer Flüssigkeit bestimmt, die bei der momentanen Geschwindigkeit und dem Hubraum der hydrostatischen Vorrichtung (2) erforderlich ist, um ein ruckfreies Umschalten auf Antrieb nur durch den Primärmotor (9) zu ermöglichen, und daß sie außerdem ständig die Ergebnisse der Messungen vergleicht und bei Übereinstimmung ein Ausgangssignal zur Auslösung des Schaltvorganges abgibt.

**Revendications**

1. Un procédé pour commander un système de transmission hydrostatique par récupération, notamment pour véhicules, ce système comportant un moteur primaire muni d'une transmission de puissance vers un axe d'entraînement et d'une machine hydrostatique qui peut être connectée sélectivement à cet arbre d'entraînement et qui est connectée à un circuit de fluide hydraulique, lequel comporte au moins une source à haute pression et une source à basse pression dudit fluide hydraulique, la machine hydrostatique, pendant le ralentissement du véhicule, étant reliée audit arbre d'entraînement et fonctionnant en pompe pour effectuer une charge de ladite source à haute pression, alors que cette dernière, pendant l'accélération du véhicule, entraîne la machine hydrostatique en moteur, et par conséquent également l'arbre d'entraînement, caractérisé en ce que, pendant l'écoulement du fluide hydraulique dans la direction allant de la source à haute pression vers la source à basse pression, l'obtention d'un volume prédéterminé de fluide dans l'une des sources est détectée pour la détermination de la quantité de fluide hydraulique subsistant dans la source à haute pression, de sorte que, dans le cas où la détection du volume prédéterminé de fluide est effectuée dans l'accumulateur à basse pression, un coefficient de correction pour la température du fluide hydraulique est incorporé dans ladite détermination de volume, laquelle est effectuée danhs ce cas en prenant en considération le volume de fluide hydraulique total donné, après quoi la variation du volume de fluide hydraulique subsistant dans la source à haute pression est déterminée continu sur la base de la vitesse et du déplacement instantanés de la machine hydrostatique en même temps que le plus faible volume du fluide hydraulique est déterminé, lequel est nécessaire, à la vitesse et au déplacement instantanés de la machine hydrostatique, pour permettre un passage sans à-coup à l'entraînement seulement au moyen du moteur primaire d'entraînement, les résultats desdites deux déterminations étant comparés en continu et, en cas d'égalité, amenés à provoquer ledit passage de manière à fournir une utilisation maximale du volume de fluide hydraulique subsistant dans la source à haute pression.

2. Un procédé selon la revendication 1, caractérisé par la poursuite, également pendant le freinage du véhicule après la fin de l'accélération de celui-ci au moyen du fluide hydraulique de la source à haute pression, c'est-à-dire pendant la circulation en sens inverse du fluide hydraulique depuis la source à basse pression vers la source à haute pression et le rechargement de cette dernière, de la détermination en continu de la variation du volume de fluide hydraulique dans la source à haute pression, de même que de la détermination de la plus faible quantité de fluide hydraulique qui est nécessaire, à la vitesse instantanée de la machine hydrostatique, pour reprendre l'entraînement au moyen de celle-ci, les résultats desdites deux déterminations étant comparés en continu et, en cas d'égalité, amenés à permettre l'entraînement au moyen de la machine hydrostatique, c'est-à-dire à permettre l'interruption de la liaison entre le moteur primaire et l'arbre d'entraînement pour réduire les pertes d'énergie par frottement.

3. Un dispositif pour mettre en oeuvre le procédé, selon la revendication 1 pour la commande d'un système de transmission hydrostatique, notamment pour véhicules, comportant un moteur primaire (9) muni d'une transmission de puissance (5) vers un arbre d'entraînement (6) et d'une machine hydrostatique (2) qui peut être connectée sélectivement à cet arbre d'entranînement (6) et qui est reliée à un circuit, de fluide hyraulique comportant au moins une source à haute pression (3) et une source à basse pression (4) de fluide hydraulique, la machine hydrostatique (2), pendant le freinage du véhicule, étant reliée à l'arbre d'entraînement (6) et agencée, lors du fonctionnement en pompe, pour pomper le fluide hydraulique dans la source à haute pression (3) pour charger celle-ci, alors que la machine (2), pendant l'accélération du véhicule, est agencée pour être entraînée en moteur par le fluide hydraulique provenant de la source à haute pression (3) et pour entraîner ainsi l'arbre d'entraînement (6), caractérisé en ce que des moyens de détection (21) sont agencés pour détecter l'obtention d'un volume prédéterminé de fluide dans l'une des sources (3 ou 4) pendant l'écoulement du fluide hydraulique dans la direction allant de la source à haute pression (3) à la source à basse pression (4) et pour délivrer ensuite à une unité électronique de commande (20) un signal de sortie pour la détermination de la quantité subsistante de fluide hydraulique dans la source à haute pression (3), des moyens de détection de température (T) étant agencés pour détecter la température du fluide hydraulique, les moyens (21) de détection de volume étant agencés pour détecter le volume de fluide dans la source à basse pression (4) et, en fonction de cette détection, pour délivrer un signal de sortie à l'unité électronique de commande (20) pour former un facteur de correction pour la détermination de quantité, ladite détermination étant agencée pour être effectuée en prenant en considération le volume total connu de fluide hydraulique, et en ce que l'unité decommande (20), après avoir reçu un signal de sortie provenant des moyens de détection de volume (21), d'une part détermine en continu la variation de la quantité de fluide hydraulique subsistant dans la source à haute pression (3) sur la base des signaux délivrés à l'unité de commande (20) et représentant les valeurs instantanées de la vitesse et du déplacement de la machine hydrostatique (2), d'autre part détermine la quantité minimale de fluide hydraulique qui est nécessaire auxdits vitesse et déplacement instantanés de la machine hydrostatique (2) pour permettre un passage sans à-coup à l'entraînement seulement par le moteur primaire (9), et d'une autre part encore compare en continu les résultats desdites déterminations et, en cas d'égalité, délivre un signal de sortie pour provoquer ledit passage.

EP 0 240 538 B1

# Fig. 1

# Fig. 2

1